# EUROPEAN PATENT APPLICATION

(11) **EP 4 741 991 A1**
(43) Date of publication of application: **13.05.2026**
(21) Application number: 24889230.9
(22) Date of filing: 29.10.2024
(51) Int. Cl.: G06F 1/16, G09F 9/302, H04N 5/64, F16M 11/42

(54) **DISPLAY DEVICE AND CONTROL METHOD THEREOF**

(30) Priority: 10.11.2023 KR 20230155208
(71) Applicant: Samsung Electronics Co., Ltd., Suwon-si, Gyeonggi-do 16677 (KR)
(72) Inventor: CHOI, Suan, Suwon-si Gyeonggi-do 16677 (KR); SON, Sungdo, Suwon-si Gyeonggi-do 16677 (KR); KIM, Sunyoung, Suwon-si Gyeonggi-do 16677 (KR); KIM, Youngwook, Suwon-si Gyeonggi-do 16677 (KR); BAN, Seokho, Suwon-si Gyeonggi-do 16677 (KR); ANN, Sungjin, Suwon-si Gyeonggi-do 16677 (KR); YOON, Sooyeoun, Suwon-si Gyeonggi-do 16677 (KR); LEE, Dongho, Suwon-si Gyeonggi-do 16677 (KR); LEE, Yongjoo, Suwon-si Gyeonggi-do 16677 (KR); CHUN, Bumho, Suwon-si Gyeonggi-do 16677 (KR); JUNG, Jaewon, Suwon-si Gyeonggi-do 16677 (KR); CHOI, Nakwon, Suwon-si Gyeonggi-do 16677 (KR); HONG, Saerom, Suwon-si Gyeonggi-do 16677 (KR)
(74) Representative: Appleyard Lees IP LLP
(86) International application number: PCT/KR2024/096403
(87) International publication number: WO 2025/101044

(57) **Abstract**

A display device is disclosed. The present device comprises: a housing on which a display is mounted; at least one connection unit formed on at least one side of the housing; a plurality of wheels disposed on both sides of a lower end of the housing; a plurality of motors for rotating the plurality of wheels, respectively; and a control unit. When at least one external display device is connected to the housing by means of the at least one connection unit and used, the control unit may control at least one of the plurality of motors according to the operational state of the entire display device, including both the display device and the at least one external display device. Accordingly, the arrangement of the display devices may be automatically changed.

## Description

### [TECHNICAL FIELD]

Apparatuses and methods consistent with the disclosure relate to a display device that can be connected to at least one external display device, and a control method thereof

### [Background Art]

With the development of an electronic technology, various kinds of electronic apparatus have been used. A representative example of an electronic apparatus used in a general household may be a display device such as a television (TV).

In conventional display devices, only a single piece of content was displayed; however, recently, multiple pieces of content may be displayed in various layouts.

There are cases in which a size of a display device is increased, or a plurality of display devices are connected and used.

Conventionally, when a plurality of display devices are connected and used, a user may rotate some of the display devices toward the user to match the user's field of view.

However, the user's usage state, such as the type or number of content and the user's posture, may change frequently. It has been difficult to change the layout of the display devices each time such changes occur.

### [Disclosure of Invention]

### [Solution to Problem]

In accordance with an aspect of the disclosure, a display device includes a housing on which a display is mounted, at least one connection unit formed on at least one side of the housing, a plurality of wheels disposed on both sides of a lower end of the housing based on the display, a plurality of motors configured to rotate each of the plurality of wheels, and a control unit, in which, when at least one external display device is connected to the housing by the at least one connection unit and used, the control unit may control at least one of the plurality of motors according to an operational state of all display devices, including both the display device and the at least one external display device.

In accordance with another aspect of the disclosure, a control method for a display device includes identifying an arrangement corresponding to an operational state of all display devices, including the display device and at least one external display device, in a state in which the display device is connected to at least one external display device in at least one direction and used, identifying a folding angle of the display device based on a position of the display device within all the display devices and the identified arrangement, and rotating at least one of a plurality of wheels disposed on both sides of the lower end of the display device so that the display device folds by the folding angle based on a connection portion with the at least one external display device.

In accordance with still another aspect of the disclosure, there is provided a non-transitory readable recording medium storing a program for executing a control method for controlling an operation of all display devices in a display device connected to at least one external display device and used. Here, the control method may include identifying an operational state of all the display devices, and folding at least one of all the display devices based on a connection portion with another device so that all the display devices are disposed in a form corresponding to the operational state.

### [Brief Description of Drawings]

FIG. 1 is a diagram for describing an operation of a display device according to at least one embodiment of the present disclosure.
FIG. 2 is a diagram illustrating a configuration of display devices connected by a hinge device.
FIG. 3 is a diagram illustrating a configuration of a connection portion between display devices in a state in which the display devices are connected by the hinge device.
FIGS. 4 to 6 are diagrams illustrating an example of a configuration of a wheel provided in the display device.
FIG. 7 is a block diagram illustrating a configuration of the display device according to at least one embodiment of the present disclosure.
FIG. 8 is a block diagram illustrating the configuration of the display device according to various embodiments of the present disclosure.
FIGS. 9 to 15 are diagrams illustrating a method for changing an arrangement of a display device according to various embodiments of the present disclosure.
FIGS. 16 to 18 are diagrams illustrating an example of graphic objects displayed on display devices.
FIG. 19 is a diagram illustrating an example of changing the arrangement according to a change in a user's usage state.
FIGS. 20 to 22 are diagrams illustrating an example of changing the arrangement according to an operating mode.
FIG. 23 is a diagram illustrating a method for changing an arrangement based on speech recognition technology.
FIG. 24 is a diagram illustrating the configuration of the hinge device according to at least one embodiment of the present disclosure.
FIG. 25 is a diagram for describing a connection method according to other embodiments of the present disclosure.
FIG. 26 is a flowchart illustrating a control method of a display device according to at least one embodiment of the present disclosure.

### [Mode for Invention]

General terms that are currently widely used were selected as terms used in various embodiments of the present disclosure in consideration of functions in the present disclosure, but may be changed depending on the intention of those skilled in the art or a judicial precedent, the emergence of a new technique, and the like. In addition, in a specific case, terms arbitrarily chosen by an applicant may exist. In this case, the meaning of such terms will be mentioned in detail in a corresponding description portion of the present disclosure. Therefore, the terms used in the present disclosure should be defined on the basis of the meaning of the terms and the contents throughout the present disclosure rather than simple names of the terms.

In the disclosure, an expression "have," "may have," "include," "may include," or the like, indicates existence of a corresponding feature (for example, a numerical value, a function, an operation, a component such as a part, or the like), and does not exclude existence of an additional feature.

An expression "at least one of A and/or B" is to be understood to represent "A" or "B" or "any one of A and B."

Expressions "first," "second," "1st" or "2nd" or the like, used in the present specification may indicate various components regardless of a sequence and/or importance of the components, will be used only in order to distinguish one component from the other components, and do not limit the corresponding components.

When it is mentioned that any component (for example: a first component) is (operatively or communicatively) coupled with/to or is connected to another component (for example: a second component), it is to be understood that any component is directly coupled to another component or may be coupled to another component through the other component (for example: a third component).

Singular expressions are intended to include plural expressions unless the context clearly represents otherwise. It will be further understood that the terms "comprises" or "have" used in this specification, specify the presence of stated features, steps, operations, components, parts mentioned in this specification, or a combination thereof, but do not preclude the presence or addition of one or more other features, numerals, steps, operations, components, parts, or a combination thereof.

In the disclosure, a "module" or a "~er/or" may perform at least one function or operation, and be implemented by hardware or software or be implemented by a combination of hardware and software. In addition, a plurality of "modules" or a plurality of "~ers/~ors" may be integrated in at least one module and be implemented by at least one processor (not illustrated) except for a "module" or a "~er/or" that needs to be implemented by specific hardware.

In the present disclosure, the term user may refer to a person using an electronic apparatus or a device (e.g., an artificial intelligence electronic apparatus) using an electronic apparatus.

Hereinafter, an embodiment of the disclosure will be described in detail with reference to the accompanying drawings.

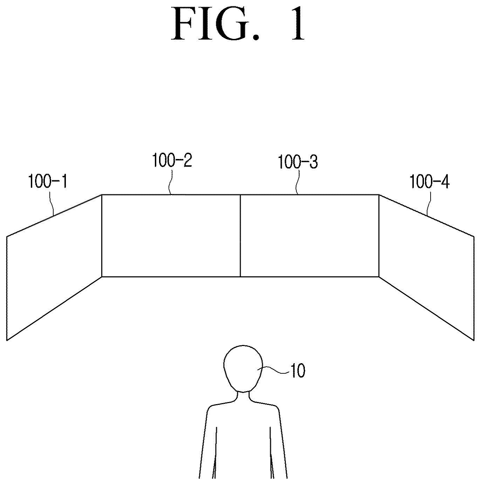

FIG. 1 is a diagram for describing an operation of a display device according to at least one embodiment of the present disclosure.

Referring to FIG. 1, a user 10 may connect and use a plurality of display devices 100-1 to 100-4. While FIG. 1 illustrates four display devices 100-1 to 100-4 connected to each other, the number of display devices may vary. Each display device 100-1 to 100-4 may be implemented as a TV or a monitor, but is not limited thereto, and may be implemented as various types of devices including display elements.

The plurality of display devices 100-1 to 100-4 may be physically and electrically connected. The plurality of display devices 100-1 to 100-4 may be directly connected, but may also be indirectly connected using an intermediate connection device. For example, a hinge device may be used between the plurality of display devices 100-1 to 100-4. When connected through the hinge device, the plurality of display devices 100-1 to 100-4 may rotate forward or backward relative to the hinge device. The structure of the hinge device will be described separately in the following section.

The plurality of display devices 100-1 to 100-4 may be implemented as devices of the same type with the same configuration. In this case, one of the plurality of display devices 100-1 to 100-4 may serve as a main device controlling other display devices. The main device may be determined in various ways. For example, the display device connected to a content source providing content may serve as the main device. Alternatively, the user may directly set the main device using a settings menu, etc. Alternatively, a device first turned on among the plurality of display devices 100-1 to 100-4 may be automatically set as the main device.

The plurality of display devices 100-1 to 100-4 do not necessarily have to be implemented with the same configuration. One of the plurality of display devices 100-1 to 100-4 may be implemented as a main display device equipped with a decoder, scaler, etc., while the other display devices may be implemented as a sub-display device without a decoder, scaler, etc.

The plurality of display devices 100-1 to 100-4 may automatically change their arrangement according to their operational state. The operational state may include various pieces of information related to the use of the plurality of display devices 100-1 to 100-4, such as a type of content displayed on the plurality of display devices 100-1 to 100-4, a distance from the user, a user's posture and field of view, a user's setting state, and the number of users. The arrangement refers to a form in which the plurality of display devices 100-1 to 100-4 are connected to each other at various angles.

In FIG. 1, among the plurality of display devices 100-1 to 100-4, two display devices 100-2 and 100-3 positioned in the middle are connected in parallel, and the display devices 100-1 and 100-4 on both sides are connected at a certain angle toward the user 10. Each of the plurality of display devices 100-1 to 100-4 may rotate based on the connection portion with the connected display device. In this disclosure, this rotation is referred to as "folding," and the connection angle with the surrounding display devices is referred to as the "folding angle." Alternatively, the "folding" may be expressed by various terms such as "bending," "rotation," or "movement," but in this disclosure, the "folding" is described interchangeably.

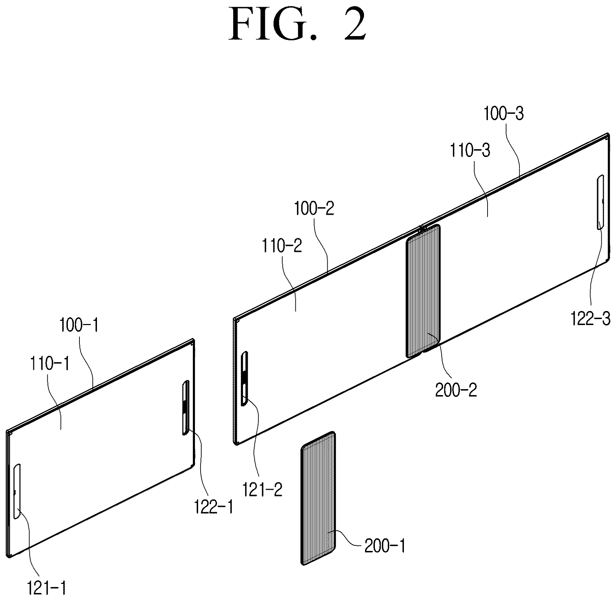

FIG. 2 illustrates a case where the plurality of display devices are connected to each other by the hinge device. FIG. 2 illustrates a state in which three display devices 100-1 to 100-3 are connected by two hinge devices 200-1 and 200-2. For connection with external devices, each of the display devices 100-1 to 100-3 includes a connection unit 121-1, 122-2, 121-2, 122-2, 121-3, and 122-3. In FIG. 2, the connection units 121-1, 122-2, 121-2, 122-2, 121-3, and 122-3 are formed one at each of rear edges of the housings 110-1, 110-2, and 110-3 of each of the display devices 100-1 to 100-3, but the present disclosure is not necessarily limited thereto, and the position, shape, and number of the connection units 121-1, 122-2, 121-2, 122-2, 121-3, and 122-3 may be variously changed. For example, the connection units may be formed on the upper, lower, left, and right sides of the housings 110-1, 110-2, and 110-3, or may be additionally formed on the upper and lower edges as well as on both sides of the rears of the housings 110-1, 110-2, and 110-3. Alternatively, when the display device has a structure that allows only one external display device to be connected in one direction, only one connection unit may be formed.

Each of the connection units 121-1, 122-2, 121-2, 122-2, 121-3, and 122-3 may be formed in a groove shape into which an external structure may be docked. The connection units 121-1, 122-2, 121-2, 122-2, 121-3, and 122-3 may include a docking member inside the groove.

The docking member includes a permanent magnet, which may magnetically couple with the permanent magnets present in the connecting members provided in the hinge devices 200-1 and 200-2.

In FIG. 2, each hinge device 200-1 and 200-2 may be connected through the connection units 121-1, 122-2, 121-2, 122-2, 121-3, and 122-3. In FIG. 2, the first hinge device 200-1 is in a state before connection, and the second hinge device 200-2 is connected by some connection units 122-2 and 121-3 formed in the second and third display devices 100-2 and 100-. In FIG. 2, some connection units 122-2 and 121-3 are covered by the second hinge device 200-2.

The plurality of display devices 100-1, 100-2, and 100-3 may be folded based on the hinge devices 200-1 and 200-2.

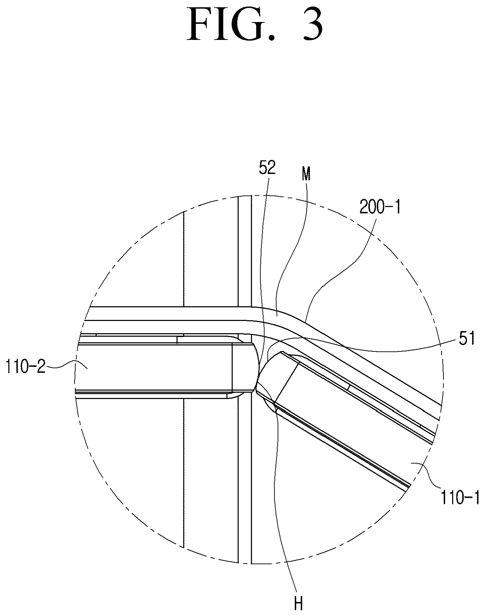

FIG. 3 is a diagram illustrating the state of the first hinge device 200-1 when the first display device 100-1 is folded relative to the second display device 100-2.

Referring to FIG. 3, when the first device 100-1 is folded relative to the second display device 100-2, a side surface 51 of the first display device 100-1 comes into contact with a side surface 52 of the second display device 100-2. To facilitate the rotation even in the folded state, the side surface 51 of the first display device 100-1 and the side surface 52 of the second display device 100-2 may protrude in a direction facing each other and have a certain curvature.

The side surface 51 of the first display device 100-1 and the side surface 52 of the second display device 100-2 may vertically contact each other, and the contact portion may be a vertical line H. The line formed by the contact of the respective side surfaces 51 and 52 may function as a hinge axis H, which is the rotation center of the first display device 100-1 and the second display device 100-2.

For example, when the second display device 100-1 is folded while the first display device 100-1 and the second display device 100-2 are disposed parallel to each other, the first and second display devices 100-1 and 100-2 rotate around the hinge axis H. Depending on a degree to which folding progresses, the hinge axis H may not be fixed at one point but may change to various positions of the side surfaces 51 and 52.

A central portion M of the first hinge device 200-1 is bent so that the first hinge device 200-1 does not interfere with the rotation of the first display device 100-1 around the hinge axis H.

Meanwhile, although FIG. 3 illustrates and describes a case where the side surfaces 51 and 52 of the display devices 100-1 and 100-2 are in direct contact with each other while forming a certain curvature, the present disclosure is not necessarily limited thereto. The first and second display devices 100-1 and 100-2 may be connected by the first hinge device 200-1 at a certain distance apart to secure a space for folding. In this case, each side surface 51 and 52 may be implemented as a flat surface.

The foregoing description has been made with reference to a connection portion connected by the first hinge device 200-1, but the connection portion between the second and third display devices 100-2 and 100-3 connected by the second hinge device 200-2 may also be implemented in the same form.

In order to change the arrangement of the plurality of display devices by folding at least one of the plurality of display devices in a state in which the plurality of display devices are connected to each other, a means for rotating the display devices may be provided at the bottom of each display device.

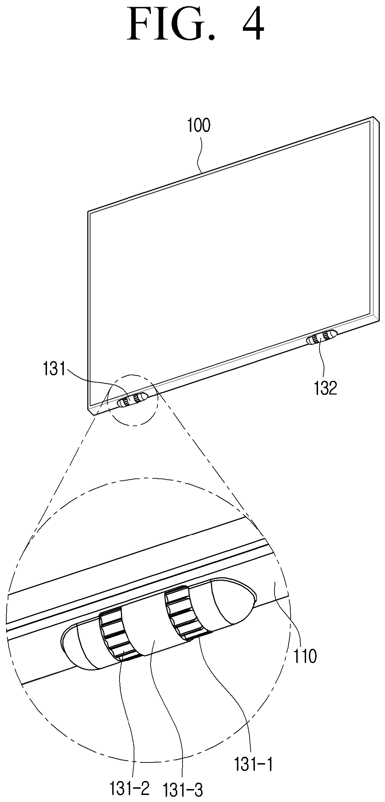

FIGS. 4 to 6 illustrate a case where wheels are provided at lower sides of each display device. FIGS. 4 to 6 illustrate one display device 100 of the plurality of display devices.

Referring to FIG. 4, a plurality of wheels 131 and 132 are disposed on both sides of the lower end of the display device 100. FIG. 4 illustrates a case where the friction member 132 is disposed in the middle of one wheel 131, thereby dividing the wheel into two wheel parts 131-1 and 131-2. The friction member 132 may surround a portion of an outer side of the wheel 131. When the wheel 131 is locked by a locker, the friction member 132 prevents the wheel 131 from rotating by applying frictional force to the floor. The display device 100 may be folded by the rotation of the wheel 131, and may be fixed to the floor by the friction member 132 when the rotation of the wheel 131 stops.

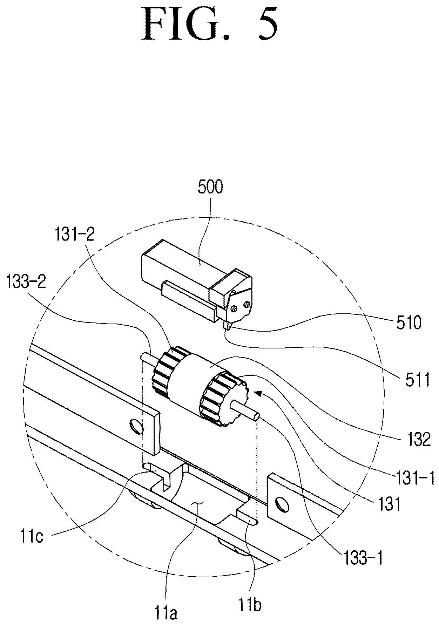

FIG. 5 illustrates a structure in which the wheel 131 and a locker 500 are coupled downward from the inside of the housing 110. The wheel 131 may be rotatably disposed in an receiving hole 11a provided at the lower end of the housing 110 of the display device 100. A pair of rotation shafts 133-1 and 133-2 that are rotatably inserted into a pair of support grooves 11b and 11c extending from both sides of the receiving hole 11a may be provided on both sides of the wheel 131.

A portion of the wheel 131 protrudes further than a lower surface of the housing 110 of the display device 100 while the wheel 131 is disposed in the receiving hole 11a. The wheel 131 may rotate around the rotation axis 133-1 and 133-2. When the wheel on the unconnected side rotates while the display device 100 is connected to an external display device at one side, since only the unconnected side moves forward or backward while the connected portion remains fixed, the display device 100 may be folded. The folding or unfolding may occur depending on the rotational direction of the wheel, and the folding angle may be changed depending on the rotational speed of the wheel. When the rotation of the wheel 131 is completed, the wheel 131 may be fixed by the friction member 132.

A locker 500 may be disposed on one side of the wheel 131 to lock the wheel 131.

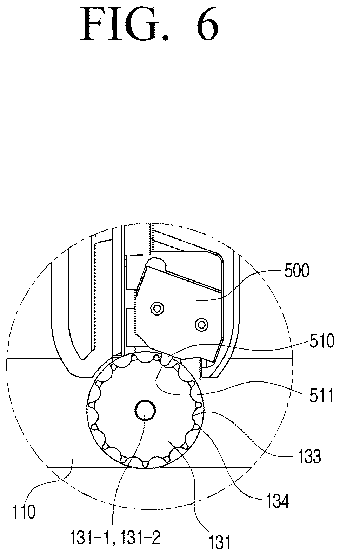

FIG. 6 is a diagram illustrating the state in which the wheel is fixed by the locker. Referring to FIG. 6, the wheel 131 may include a plurality of locking grooves 133 and a plurality of protrusions 134. A tip 511 of a latch 510 connected to the locker 500 may be inserted into the plurality of locking grooves 133. The latch 510 may be rotatably connected to the locker 500 while the wheel 131 rotates. In this case, a rear end of the latch 510 may be elastically connected to the locker 500 by a separate elastic member (not illustrated).

In this state, when the wheel 131 rotates in one direction to fold the display device 100, the tip 511 of the latch 510 is pushed by the protrusion 134 between adjacent locking grooves 133 and rotates counterclockwise, and then when the protrusion 134 passes the tip 511 of the latch 510, the latch returns to its original position by the elastic force of the separately provided elastic member. When the folding operation of the display device 100 is completed and the driving of the motor for rotating the wheel 131 stops operating, the tip 511 of the latch 510 is fixed in the state in which it is inserted into the locking groove 133 of the wheel 131. Accordingly, the latch 510 may prevent the wheel 131 from rotating.

While the detailed configuration of the wheel is specifically illustrated and described in FIGS. 4 to 6, the wheel structure is not necessarily limited thereto, and the structure of the wheel may be modified variously. In FIG. 6, the latch 510 may be implemented in a form in which the wheel 131 is spaced apart from the locking groove 133 during the folding so that the wheel 131 may rotate, and when the folding is completed, it is inserted into the locking groove 133 to prevent the wheel 131 from rotating.

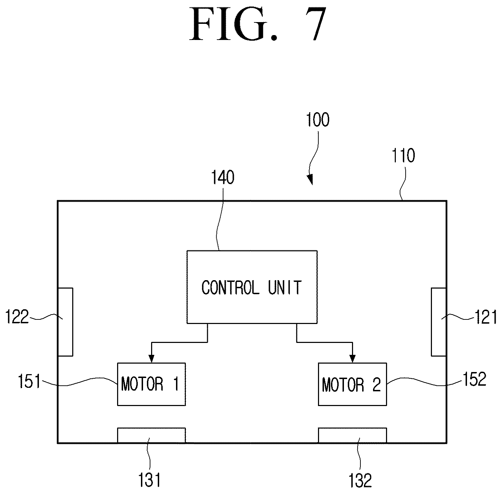

FIG. 7 is a block diagram illustrating a configuration of the display device according to at least one embodiment of the present disclosure. Referring to FIG. 7, the display device 100 includes the plurality of wheels 131 and 132, a plurality of motors 161 and 162, connection units 121 and 122, and a control unit 140.

Each of these components may be mounted within a housing 110. The housing 110 may house a display.

The connection units 121 and 122 may be formed on at least one side of the housing 110. For example, as illustrated and described in FIG. 2, the connection units 121 and 122 may be disposed on both sides of the rear edge of the housing 110, but may also be disposed in various other positions.

The plurality of wheels 131 and 132 may be disposed on both sides of the lower end of the housing 110. The plurality of wheels 131 and 132 may be connected to a plurality of motors 151 and 152. The plurality of wheels 131 and 132 may be directly connected to the plurality of motors 151 and 152 or may be indirectly connected through at least one crank, shaft, etc.

The plurality of motors 151 and 152 may rotate each wheel 131 and 132. Under the control of the control unit 140, the plurality of motors 151 and 152 may change the rotation direction, rotation speed, rotation frequency, etc., of each wheel 131 and 132.

The control unit 140 is a component for controlling the operation of the display device 100.

When at least one external display device is connected and used through the connection units 121 and 122, the control unit 140 may control at least one of the plurality of motors according to the operational state of all display devices, including the display device 100 and at least one external display device. Accordingly, the display device 100 may be folded relative to the connected peripheral external display devices, and consequently, the arrangement of all the display devices may be changed.

When the display device 100 of FIG. 7 is one of all the display devices 100-1 to 100-4 of FIG. 1, the display device 100 may operate as a main device or a sub-device, and operate as a sub-device.

When operating as the sub-device, the control unit 140 may perform various operations in response to a control signal received from at least one of the external display devices. For example, when a control signal for rotating at least one of the plurality of wheels 311 and 132 in a first direction or a second direction opposite to the first direction is received through at least one of the plurality of connection units 121 and 122, at least one of the plurality of motors 151 and 152 may be controlled according to the control signal. In addition, the control unit 140 may receive data for a portion or all of a content screen decoded and scaled by the main device through at least one of the plurality of connection units 121 and 122. The control unit 140 may control the display to display part or all of images of the content screen based on the received data.

When operating as the main device, the control unit 140 may also transmit the control signal to the remaining external display devices so that the arrangement of all the display devices changes according to the operational state of all the display devices. In this case, the display device 100 may further include various components to detect the operational state.

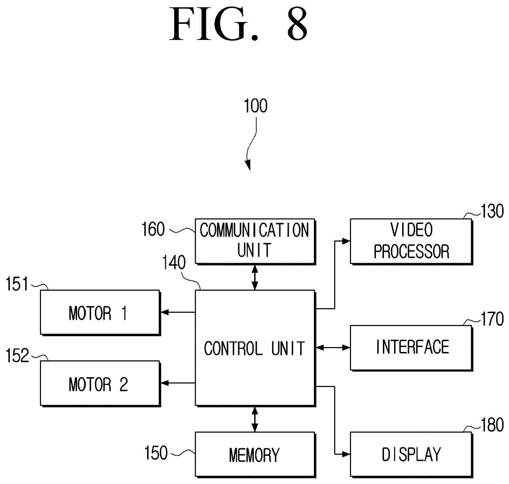

FIG. 8 is a block diagram illustrating the configuration of the display device 100 according to various embodiments of the present disclosure. Referring to FIG. 8, the display device 100 includes the plurality of motors 151 and 152, a video processor 130, the control unit 140, a memory 150, a communication unit 160, an interface 170, and a display 180. In FIG. 8, components such as the plurality of wheels 131 and 132, the plurality of connection units 121 and 122, and the housing 110 are not illustrated, but these components may also be included in FIG. 8. Duplicate descriptions of the same components as those described in FIG. 7 will be omitted.

The memory 150 may store various software, commands, data, etc. For example, the memory 150 may store various pieces of configuration information set by a user. The configuration information may include configuration information on various display options such as a background screen preferred by each user, volume information customized for each user, preferred channel information, color, contrast, resolution, and image size, configuration information on an arrangement of all the display devices or a folding angle of the corresponding display device 100, etc. The configuration information may also include information directly set by each user as well as automatically saved information. For example, information on an operating mode finally used by a user, information on content finally viewed, information on a content source providing the content, etc., may be automatically saved.

The memory 150 may be implemented in the form of memory embedded in the display device 100 or may be implemented in the form of memory that can be attached or detached to the display device 100. The memory embedded in the electronic apparatus 100 may include at least one of, for example, a volatile memory (for example, a dynamic random access memory (DRAM), a static RAM (SRAM), a synchronous dynamic RAM (SDRAM), or the like, a non-volatile memory (for example, a one time programmable read only memory (OTPROM), a programmable ROM (PROM), an erasable and programmable ROM (EPROM), an electrically erasable and programmable ROM (EEPROM), a mask ROM, a flash ROM, or the like, a flash memory (for example, a NAND flash, a NOR flash, or the like), a hard drive, and a solid state drive (SSD). The memory 150 detachable from the display device 100 may be implemented in the form of the memory card (e.g., compact flash (CF), secure digital (SD), micro secure digital (Micro-SD), mini secure digital (Mini-SD), extreme digital (xD), multi-media card (MMC), etc., external memory (e.g., USB memory) connectable to a USB port, and the like. In FIG. 8, one memory 150 is illustrated, but the number of memories 150 may be variously changed.

The video processor 130 may be configured to process video data input to the display device 100 and generate image frames. The video processor 130 may decode the input video data and then scale the video data to the size of the display 180, thereby generating image frames. When a single content screen should be displayed along with at least one external display device, the video processor 130 may scale the screen to a size that combines the size of the display 180 and the display size of the external display device. The control unit 140 controls the display 180 to display a partial image frame corresponding to the position of the display device 100 among the image frames generated by the video processor 130, and transmits the partial image frame corresponding to the position of the external display device to the external display device.

While only the video processor 130 is illustrated in FIG. 8, when the display device 100 is capable of playing and outputting multimedia content, various components, such as a demultiplexer and an audio decoder, may be further included. These components are well known, so their specific illustrations and descriptions will be omitted.

The control unit 140 may perform various operations based on software, commands, and data stored in the memory 150. The control unit 140 may be implemented as a control circuit for controlling the operation of the motors 151 and 152, but is not limited thereto and may be implemented as various types of processors. Specifically, the control unit 140 may be implemented by a digital signal processor (DSP), a microprocessor, or a time controller (TCON) that processes a digital signal. However, the control unit 130 is not limited thereto, but may include one or more of a central processing unit (CPU), a micro controller unit (MCU), a micro processing unit (MPU), a controller, an application processor (AP), a communication processor (CP), and an ARM processor, or an artificial intelligence (AI) processor, or may be defined by these terms. In addition, the control unit 140 may be implemented by a system on chip (SoC) or a large scale integration (LSI) in which a processing algorithm is embedded, or may be implemented in the form of a field programmable gate array (FPGA).

Although one control unit 140 is illustrated in FIG. 8, the control unit 140 may be implemented in plural numbers. In addition, at least one of the plurality of control units may be integrally implemented as the memory 150.

The communication unit 160 is a configuration for performing communication with at least one external device. The communication unit 160 may transmit and receive various signals and data to and from external devices through various wired and wireless communication methods, such as Bluetooth, AP-based Wi-Fi (wireless LAN network), Zigbee, wired/wireless local area network (LAN), wide area network (WAN), Ethernet, IEEE 1394, high-definition multimedia interface (HDMI), universal serial bus (USB), mobile high-definition link (MHL), audio engineering society/European broadcasting union (AES/EBU), optical, and coaxial. Alternatively, the communication unit 160 may further include an IR receiving circuit for receiving an Infra red (IR) signal, etc. The IR receiving circuit may receive an IR signal transmitted from an external remote control and transmit the IR signal to the control unit 140. The control unit 140 may perform operations corresponding to the IR signal. However, the IR receiving circuit is not necessarily required, and the display device 100 may be connected to an external remote control through Bluetooth to receive the remote control signal.

The communication unit 160 may communicate with various external devices, such as PCs, laptop PCs, mobile phones, tablet PCs, game players, set-top boxes, one connect boxes, and multimedia players. Alternatively, the communication unit 160 may communicate wirelessly with other display devices while connected to a plurality of external display devices, as illustrated in FIG. 1. For example, when the display device 100 is implemented with a structure that is only physically connected to an external display device, rather than being connected through a hinge device capable of signal transmission, the control unit 140 may transmit and receive various data and control signals while communicating with the external display device through the communication unit 160.

The interface 170 is configured for wired connection with various external devices. The interface 170 may include various input/output ports such as an HDMI port, a USB port, a component video connection port, a composite video connection port, a cable connection port, and a LAN port. At least some of the interfaces 170 may be disposed in the connection units 121 and 122. At least one port or pin for transmitting and receiving various signals and data to and from the external display devices, a power interface for transmitting power, etc., may be provided inside the connection units 121 and 122. The connection units 121 and 122 may be connected to a peripheral display device through the hinge device to transmit various signals, data, power, etc.

The interface 170 may be connected to various external devices, such as a camera, a mouse, a keyboard, a joystick, a microphone, and a speaker. Various content sources, such as PCs, laptop PCs, mobile phones, tablet PCs, game players, set-top boxes, one connect boxes, and multimedia players, may also be connected through the interface 170 when connected through wires.

The display 180 may display various images under the control of the control unit 140. Specifically, the display 180 may be implemented in various types of displays such as a liquid crystal display (LCD), an organic light emitting diode (OLED), a liquid crystal on silicon (LCoS), a digital light processing (DLP), a quantum dot (QD) display panel, quantum dot light-emitting diodes (QLED), micro light-emitting diodes (µLED), and a mini LED. When the display 180 is implemented as an LCD requiring an external light source, a backlight unit may be further included, but the illustration and description thereof will be omitted.

The control unit 140 may change the folding angle of the display device 100 itself or the arrangement of all the display devices based on various information, software, and commands stored in the memory 150. Specific methods of changing the arrangement are described below with reference to various drawings.

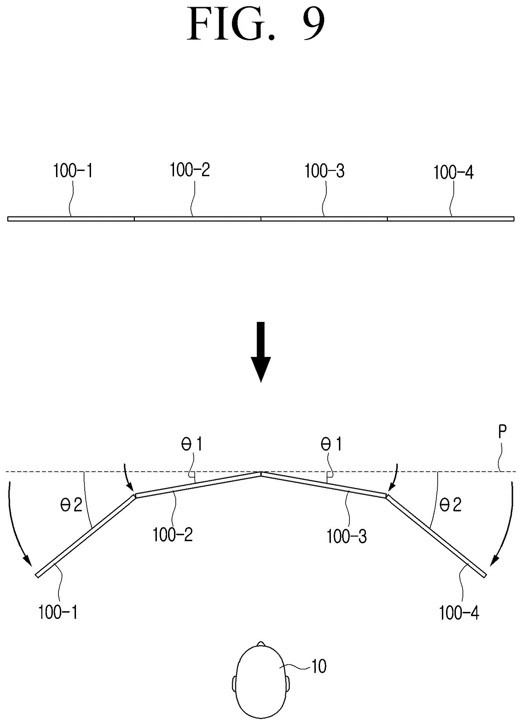

FIGS. 9 to 21 are diagrams for describing various embodiments of changing the arrangement of the plurality of display devices. For convenience of description, FIGS. 9 to 21 illustrate that the number of display devices is variously changed within the range of 2 to 4, but the present disclosure is not limited thereto, and the number of display devices may be implemented as 5 or more. Furthermore, FIGS. 9 to 21 illustrate a state in which all the display devices are connected horizontally parallel, but the present disclosure is not necessarily limited thereto, and all the display devices may be connected vertically, or the external display device may be additionally connected above or below at least one of all the display devices. In this case, since the folding may not be achieved by the rotation of the wheel, the hinge device connecting the vertically connected display devices may include an actuator and motor to change a connection angle of the connecting portions.

FIG. 9 illustrates a state in which four display devices 100-1 to 100-4 are connected. In FIG. 9, all the display devices 100-1 to 100-4 are disposed horizontally parallel when in standby mode.

In this state, when the user 10 uses all the display devices 100-1 to 100-4, all the display devices 100-1 to 100-4 change their arrangement. FIG. 9 illustrates the state in which all the display devices 100-1 to 100-4 are folded by θ2 based on a line P where they were originally disposed, and the first and fourth display devices 100-1 and 100-4 are folded by θ1.

The arrangement of all the display devices 100-1 to 100-4 may be changed by the control of the display device set as the main device among all the display devices 100-1 to 100-4, or each display device 100-1 to 100-4 may individually change its folding angle to change the arrangement as a whole. For example, when changing the arrangement state as illustrated in FIG. 9, the control units of the first and fourth display devices 100-1 and 100-4 may rotate the wheels disposed on the opposite sides of the connection portions with the second and third display devices 100-2 and 100-3 to fold the second and third display devices 100-2 and 100-3 by an angle of θ2-θ1. The second and third display devices 100-2 and 100-3 may be folded by an angle of θ1 with respect to the horizontal line P by rotating the wheels on the sides of the connection portions with the first and fourth display devices 100-1 and 100-4. As a result, the arrangement may be changed as illustrated in FIG. 9. When each display device 100-1 to 100-4 is implemented to individually change its folding angle, each display device 100-1 to 100-4 may include memory that stores folding angle information set differently for various events.

Hereinafter, the description will be made with reference to the case where all the display devices 100-1 to 100-4 are controlled by one display device 100 that is set as the main device among the plurality of display devices 100-1 to 100-4.

When the control unit 140 detects that the user 10 is positioned within a viewable range with respect to all the display devices 100-1 to 100-4, the control unit 140 may change the arrangement based on configuration information of the user 10. The viewable range may be set based on the distance between the user 10 and at least one of all the display devices 100-1 to 100-4. For example, the viewable range may be set to within 5 meters based on one of the display devices 100-2 and 100-3 positioned in the central portion, but is not limited thereto and may be set to various criteria and various values.

The display device 100 may include various sensors such as a camera, an ultrasonic sensor, or an IR sensor, or may be connected to these devices through the interface 170. The control unit 140 detects whether the user has approached within the viewing range based on the sensing values of these sensors, and when it is determined that the user has approached, may control at least one of the plurality of motors 151 and 152 to rotate at least one of the plurality of wheels, or transmit the control signal to the external display devices together or separately. The control signal may be transmitted through the connection unit 121 and 122, but is not necessarily limited thereto, and may also be transmitted through a communication session connected to the external display device through the communication unit 160. In this embodiment, since the user may not be identified, the control unit 140 may change the arrangement of all the display devices based on a default value stored in the memory 150.

According to other embodiments, instead of detecting whether the user 10 has approached, the control unit 140 may acquire the configuration information corresponding to the user's identification information from the memory 150 when the user inputs his or her identification information, and may change the arrangement of all the display devices based on the arrangement information among the configuration information. The identification information may include information that enables identifying each user. For example, the identification information may include various pieces of information such as a user's ID and password, a user name, a nickname, a phone number, an address, an email address, and a messenger ID.

According to other embodiments, the control unit 140 may recognize a user using various sensors. For example, when the display device 100 includes a camera or is connected to the camera through the communication unit 160 or the interface 170, the control unit 140 may recognize the user based on an image captured by the camera. A method for recognizing the user may be implemented variously.

For example, the control unit 140 divides all pixels included in each of multiple continuous image frames into a plurality of blocks, each block being composed of n*m pixels. The control unit 140 may detect a representative value representing the characteristics of the pixels within each block. The representative value may be an average pixel value of pixels within each block, but is not limited thereto. The representative value may also be a maximum pixel value, a minimum pixel value, or a root mean square (RMS) value.

The control unit 140 may connect, among the plurality of blocks, blocks that have representative values within a similar range and may be disposed at continuous positions to form a closed loop, thereby identifying the closed loop as an edge of an object included in the captured image. The control unit 140 may identify the size of the object based on the number of blocks within the edge. Furthermore, the control unit 140 may identify the shape of the object based on the shape of the edge, thereby identifying the type of the object.

When the camera is installed at the upper end or lower end of the central display device 100-2 and 100-3 among the plurality of display devices, and the user 10 is using all the display devices 100-1 to 100-4 as illustrated in FIG. 9, the camera may capture the user's 10 face in a frontal direction. Accordingly, the captured image may display the user's 10 face in a circular or vertically oval shape.

When the edge has a circular shape or a vertically oval shape, and color values of blocks inside the edge fall within a range similar to a facial color of the user 10, the control unit 140 may determine that the blocks within the edge correspond to the user's 10 face. The processor 150 may then extract blocks corresponding to the user's 10 eyes, nose, and mouth from the blocks corresponding to the user's 10 face, thereby identifying the overall facial characteristics of the user 10. The control unit 140 may identify the captured user by comparing the information on the users stored in the memory 150 with the identified overall facial characteristic information.

When the user is identified, the control unit 140 may acquire the configuration information corresponding to the user from the memory 150 and identify the configuration information on the arrangement of all the display devices among the acquired configuration information. The control unit 140 may control at least one of the plurality of motors 151 and 152 based on the configuration information, or transmit the control signal for folding at least one external display device through at least one connection unit 121 and 122.

As described above, the configuration information may also store information on an operating mode finally used by a user, content, or information on a content source, in addition to the information on the arrangement of all the display devices and the folding angle, etc.

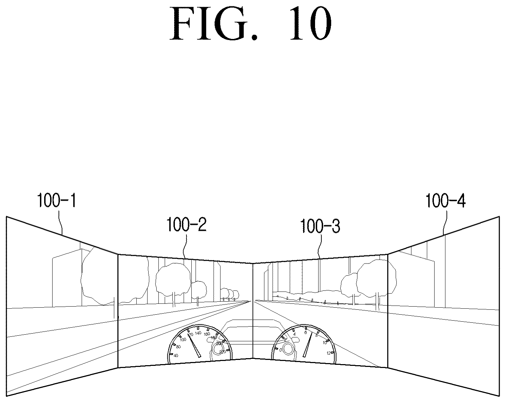

FIG. 10 illustrates a state in which a game screen finally used by a user is displayed. Referring to FIG. 10, four display devices 100-1 to 100-4 display the final content while changing to the arrangement that the user finally used when the user is identified. FIG. 10 illustrates a state of displaying the game screen.

In the above-described example, the case where, when a user is recognized, the folding and content display operations are performed based on the arrangement and content information corresponding to the user has been described. However, when the user is not recognized and the approach of the user is detected, all the display devices 100-1 to 100-4 may automatically display the content from the content source they finally displayed while the arrangement is changed based on the default value.

While FIGS. 9 and 10 describe an embodiment where the arrangement is automatically changed based on the user's configuration information, according to other embodiments, the plurality of display devices 100-1 to 100-4 may be changed to different arrangements according to the type or number of contents being displayed.

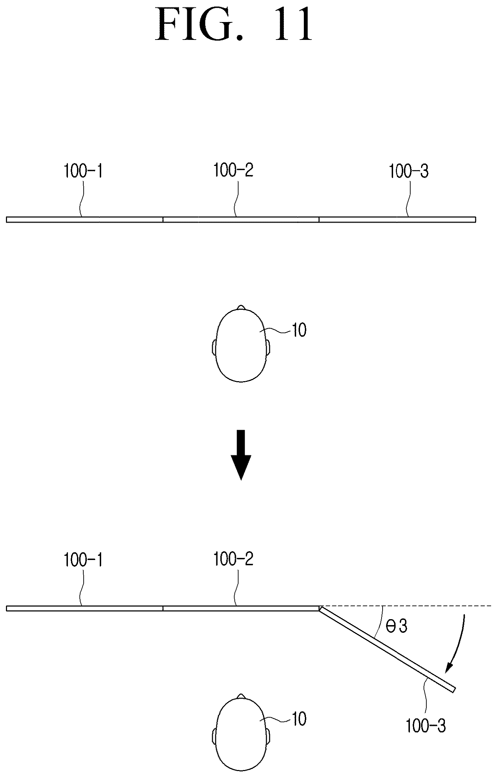

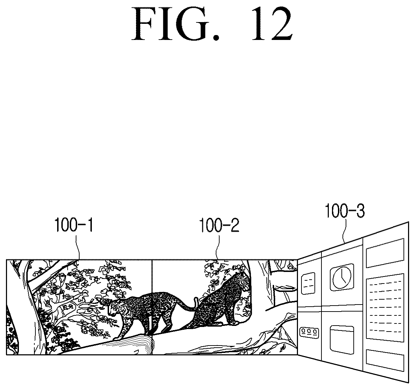

Referring to FIGS. 11 and 12, three display devices 100-1, 100-2, and 100-3 may be connected to each other and display two or more contents. This state of displaying multiple contents is referred to as a multitasking state in the present disclosure. When the multitasking is performed, the control unit 140 of the display device 100 may identify the type or number of content provided by all the display devices, and control at least one of the plurality of motors 151 and 152 based on the identified information, or transmit the control signal for folding at least one external display device through at least one connection unit 121 and 122.

Referring to FIG. 11, among three display devices 100-1, 100-2, and 100-3, two left display devices 100-1 and 100-2 remain in a parallel state, while one right display device 100-3 is in a folded state.

Referring to FIG. 12, among the three display devices 100-1, 100-2, and 100-3, the two left display devices 100-1 and 100-2 display single movie content, while the right display device 100-3 displays a separate, unrelated work screen.

The control unit 140 may identify the type or number of content based on a user command selecting multiple content or content sources. For example, when the movie content is selected first, the control unit 140 may display the movie content by keeping all the display devices 100-1, 100-2, and 100-3 parallel or folding only the two display devices 100-1 and 100-3 on either side. In this state, the user may select a PC from among the external sources and input a user command to display an additional PC screen. When the control unit 140 displays an additional screen during the movie content display, as illustrated in FIGS. 11 and 12, two display devices 100-1 and 100-2 may be connected in parallel to provide a large screen, while one display device 100-3 may be folded toward the user for easy viewing.

The information on the arrangement or folding angle corresponding to the type or quantity of content may be pre-stored in the memory 150.

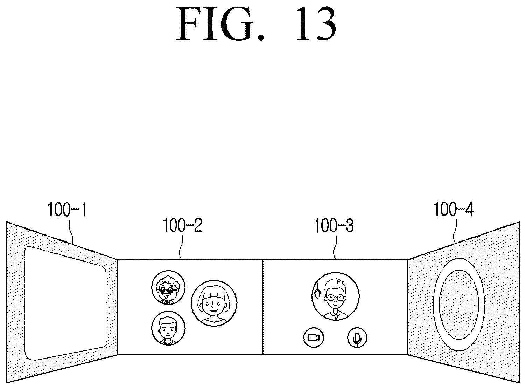

FIG. 13 illustrates the state in which the arrangement is changed according to the type of content. In the case of content such as a personal broadcast screen, various screens, such as the user's own video, viewers' videos, or messages, may be displayed simultaneously. Additionally, lighting may be required so that the user's face is captured more brightly.

Referring to FIG. 13, among the four display devices 100-1 to 100-4, the display devices 100-1 and 100-4 on both sides may display brightly colored images with a brightness level above a certain level when folded at a certain angle. Accordingly, the display devices 100-1 and 100-2 on both sides may function as lighting.

One 100-3 of the display devices 100-2 and 100-3 in the middle may display the user's own video and various control menus, while the other 100-2 may display videos, messages, etc., from viewers watching personal broadcast screens.

While the arrangement changes and content screens described in FIG. 13 may be controlled by the control unit 140 of the display device 100 that is the main device, as described above, each display device may operate independently.

Meanwhile, the control unit 140 continuously tracks blocks identified in multiple sequentially captured images by the camera and compares the positions, shapes, numbers, etc., of the blocks to identify the changes in the gaze direction of the user, the distance from the user, the position, etc. The control unit 140 may identify at least one of the position of the user, the distance from the user, and the gaze direction of the user, and determine the arrangement of all the display devices based on the identified information. The information related to the use of all the display devices, such as the position, distance, and gaze direction of the user, is referred to as operational state information in the present disclosure.

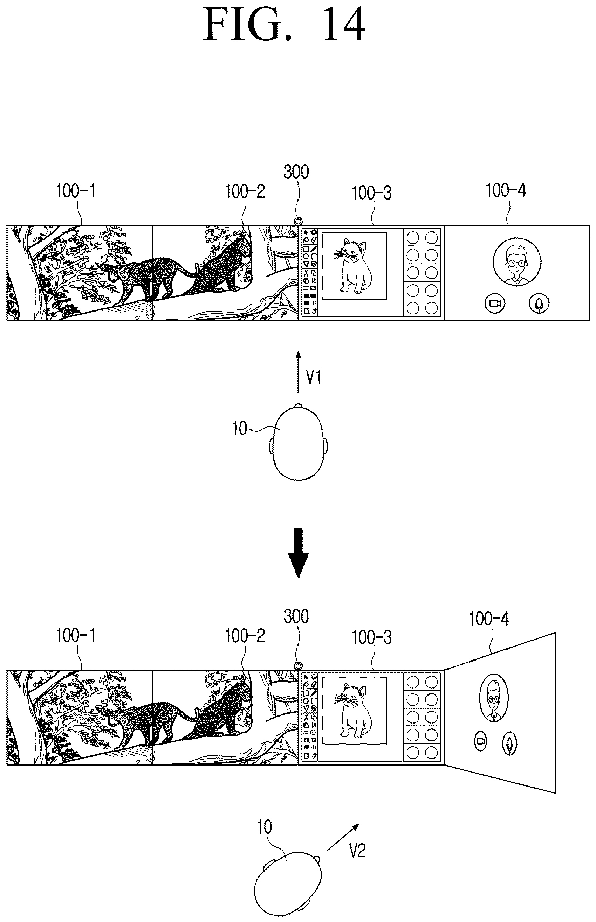

FIG. 14 illustrates an embodiment of changing the arrangement according to the change in the gaze direction of the user. Referring to FIG. 14, the control unit 140 may receive data for images captured by the camera 300, analyze the captured images using the above-described method, and identify the user. FIG. 14 illustrates the state in which the camera 300 is positioned at the exact center of the plurality of display devices 100-1 to 100-4. Unless the camera 300 is embedded in one of the plurality of display devices 100-1 to 100-4, the user 10 may establish communication between the separately provided camera 300 and the display device 100 and place the camera 300 in any position.

The control unit 140 may detect the gaze direction of the user by identifying the change in the user's facial shape within the plurality of captured images. For example, when the user's nose area is identified as moving to one side while changing from a circle to an oval, it may be determined that the user has changed the gaze direction in that direction.

FIG. 14 illustrates the case where a user 10 faces forward and then turns his/her face to the right. When the control unit 140 identifies that the gaze direction of the user has changed from a front direction V1 to a lateral direction V2, the control unit 140 controls the display device 100-4 corresponding to the lateral direction V2 to be folded. When the display device 100 is a side display device 100-4, the control unit 140 may fold the display device 100 by rotating the right wheel among the plurality of wheels based on the position of the user to move the right edge portion of the display device 100 forward. On the other hand, when the display device 100 is one of the remaining display devices 100-1, 100-2, and 100-3 and not the side display device 100-4, the control unit 140 may transmit the control signal to the side display device 100-4 to fold the side display device 100-4.

FIG. 14 illustrates that the plurality of display devices 100-1 to 100-4 are disposed parallel in a parallel direction when the user faces the front direction V1. However, as described in various embodiments above, the arrangement of the plurality of display devices 100-1 to 100-4 may be additionally changed according to the gaze direction of the user while the arrangement is changed according to the configuration information of the user, the type and number of content, etc.

According to the above embodiments, the case where the display device 100 automatically changes the arrangement according to various events is described. However, according to other embodiments, the display device 100 may change the arrangement of all the display devices based on a user command. The user command may be input to the display device 100 through various input means, such as a mouse, a keyboard, a wheel controller, or a joystick. When the display 180 of the display device 100 is implemented as a touch screen, the user command may be input through the touch screen. However, the present disclosure is not limited thereto, and the display device 100 may also receive the user command using the motion recognition technology or the speech recognition technology.

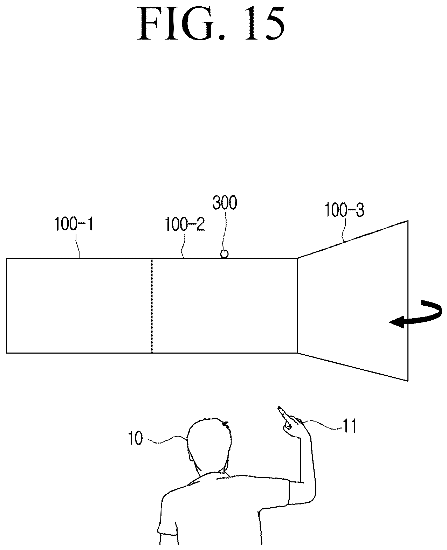

FIG. 15 illustrates an embodiment in which a user changes the arrangement of all the display devices using a motion gesture using his or her hand.

The section described above described the method for identifying the user's 10 face. However, the control unit 140 may also identify the user's hand or torso in addition to the user's 10 face, and track the identified portion to identify the movement of the hand or torso.

Referring to FIG. 15, the user 10 may input a motion gesture to move his or her hand 11 in a specific direction while the three display devices 100-1, 100-2, and 100-3 are connected.

The control unit 140 may track the positional changes in blocks corresponding to the hand 11 among multiple continuously captured images, thereby recognizing the motion gesture using the hand 11. When the control unit 140 determines that the right hand of the user 10 has moved, the control unit 140 may fold the display device 100-3 on the right side. The control unit 140 may change the folding direction or folding angle based on the movement direction or movement distance of the right hand 11.

In another example, the control unit 140 may recognize the hand 11 making a specific motion gesture as a trigger signal and select the display device to be folded based on the trigger signal or subsequent movement of the hand 11. For example, when the user 10 draws a circle with one hand 11 and then makes a motion gesture pointing to one of the three display devices 100-1, 100-2, and 100-3 with that hand 11, the control unit 140 may recognize an operation of drawing a circle as a trigger signal and select the display device pointed to by the hand 11 as the folding target. Alternatively, when the user raises their hand 11 and makes a motion gesture pointing to one display device, the motion gesture itself may be recognized as the trigger signal, and the display device pointed to by the hand 11 may be selected as the folding target.

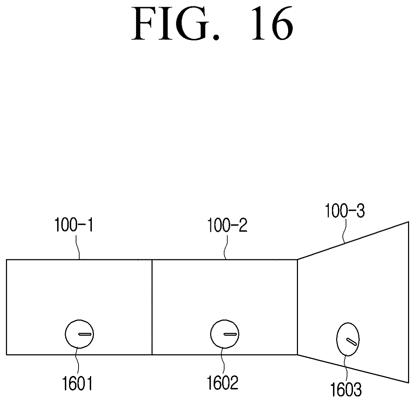

FIG. 16 illustrates displaying a graphic object indicating the folding angle of each display device when a user changes the folding angle of at least one of the plurality of display devices.

Referring to FIG. 16, when the three display devices 100-1, 100-2, and 100-3 are connected and a user wishes to change the arrangement by inputting various user commands, each display device 100-1, 100-2, and 100-3 may display graphic objects 1601, 1602, and 1603 indicating the folding angle. Each graphic object 1601, 1602, and 1603 of FIG. 16 is illustrated as being displayed in the form of an image corresponding to the folding angle. However, in addition to the image, a graphic object indicating an angle value representing the folding angle may also be displayed.

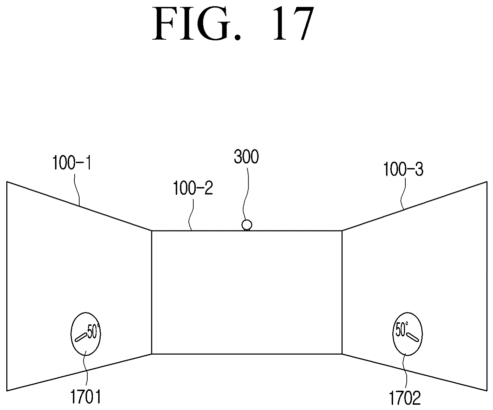

FIG. 17 illustrates a case where graphic objects 1701 and 1702 including an angle value representing the folding angle and the folding image are displayed. Referring to FIG. 17, when the three display devices 100-1, 100-2, and 100-3 are connected, the control unit 140 may change the angle value and the folding image in real time while folding both display devices 100-1 and 100-3 according to the user command. The user may determine the arrangement of all the display devices while viewing the graphic objects 1701 and 1702.

FIGS. 16 and 17 illustrate graphic objects displayed when the folding angle of at least one of the plurality of display devices is gradually changed based on the user command. However, the arrangement may be configured in other ways.

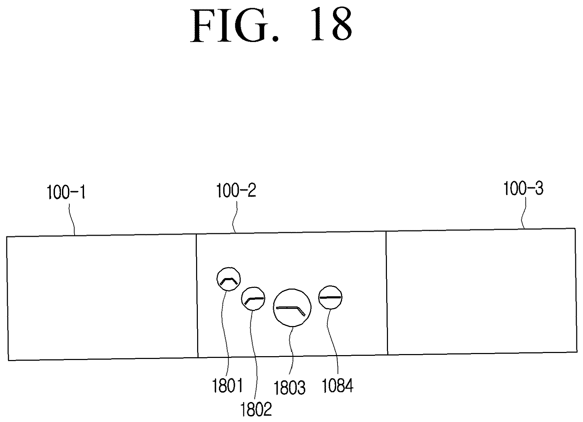

FIG. 18 is a diagram for describing a method for changing an arrangement according to other embodiments of the present disclosure. FIG. 18 illustrates a state in which a single display device 100-2 displays multiple menus 1801 to 1804 corresponding to various arrangements while the plurality of display devices 100-1, 100-2, and 100-3 are connected.

The control unit 140 directly controls its own display 180 or controls the external display device to display menus 1801 to 1804 illustrated in FIG. 18. While FIG. 18 illustrates four menus 1801 to 1804, when the arrangement may be changed variously, various menus may further be included so as to correspond to the changed state. The control unit 140 may scroll through multiple menus 1801 to 1804 according to the user input, and among these menus, a menu at a specific position may be displayed in a relatively larger size. FIG. 18 illustrates a state where the third menu 1803 is displayed in a large size.

When one of the menus is selected, the control unit 140 may control all the display devices to change to the arrangement corresponding to that menu.

Meanwhile, the control unit 140 may analyze the captured images of the camera to identify the changes in distance or position from the user. For example, as described above, when the user's face or torso is identified in the captured images, the control unit 140 may track blocks corresponding to that portion across a plurality of continuous captured images and identify the changes in the number or positions of the blocks. When the number of blocks decreases, the control unit 140 may determine that the user has moved away from the camera 300, and when the number of blocks increases, the control unit may determine that the user has moved closer to the camera 300.

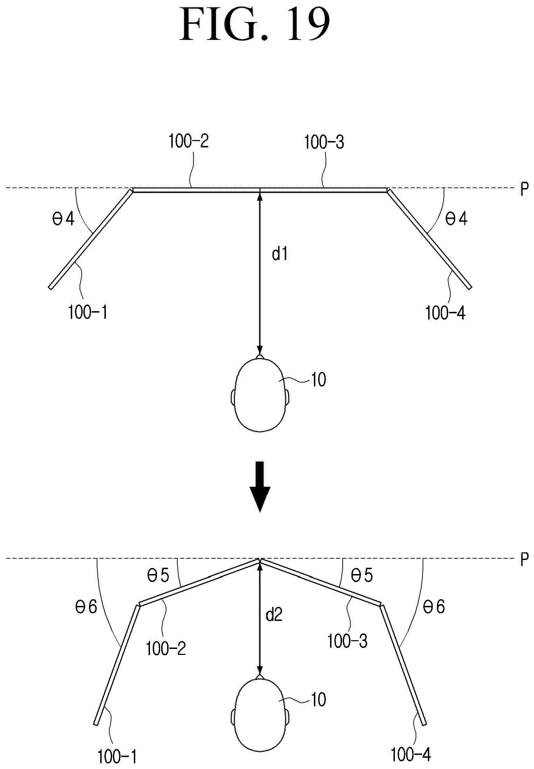

FIG. 19 illustrates the display devices that change their arrangement according to the change in the distance form the user. FIG. 19 illustrates the state where a total of four display devices 100-1 to 100-4 are connected to each other and the camera 300 is positioned at the central portion.

Referring to FIG. 19, when the distance from the user is d1, the control unit 140 may keep the display devices 100-2 and 100-3 in the middle portion parallel and fold the side display devices 100-1 and 100-4 by an angle of θ4. In this state, when the user 10 approaches closely and reaches a distance of d2, the control unit 140 controls the display devices 100-2 and 100-3 in the middle portion to fold by θ5 relative to the parallel line P so that all the display devices may be viewed from the user's position, and the side display devices 100-1 and 100-4 may be folded by θ6.

The case where the arrangement may be changed according to various conditions such as the user's usage state, the type or number of content, and the configuration information was described. However, the arrangement may also be changed according to the number of users or the operating mode.

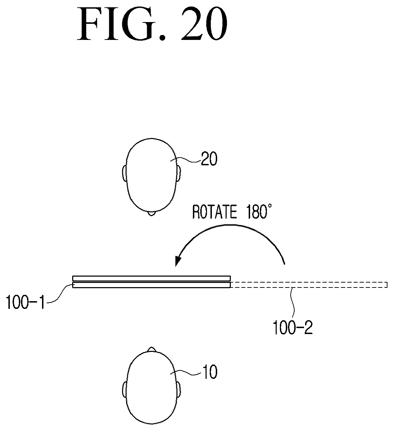

FIGS. 20 to 22 illustrate embodiments in which the arrangement is changed in various ways depending on the number of users or the operating mode.

FIG. 20 illustrates a case where two users 10 and 20 use the display devices 100-1 and 100-2 in a two-person conference mode while the two display devices 100-1 and 100-2 are connected. The control unit 140 may fold one 100-2 of the two display devices 100-1 and 100-2 so that the rear surfaces of the two display devices 100-1 and 100-2 face each other. In FIG. 20, the rear surfaces of the two display devices 100-1 and 100-2 are illustrated as being in close contact, but in cases where complete contact is difficult due to the characteristics of the hinge device or the hinge configuration connecting the two display devices 100-1 and 100-2, the displays of the two display devices 100-1 and 100-2 may be folded at the maximum angle so that they are almost in opposite directions. Alternatively, when one user 20 is positioned in a lateral direction of another user 10, the two display devices 100-1 and 100-2 may be folded at an angle of approximately 90°.

The control unit 140 may display different content screens on each of the two display devices 100-1 and 100-2 or the same content screen, as illustrated in FIG. 20, in the state in which the arrangement is changed.

For example, when a doctor uses the display devices 100-1 and 100-2 of FIG. 20 to examine a patient, the doctor may view a screen different from that viewed by the patient so as to prevent the patient from seeing unnecessary information, or may share the same screen to explain the patient's condition.

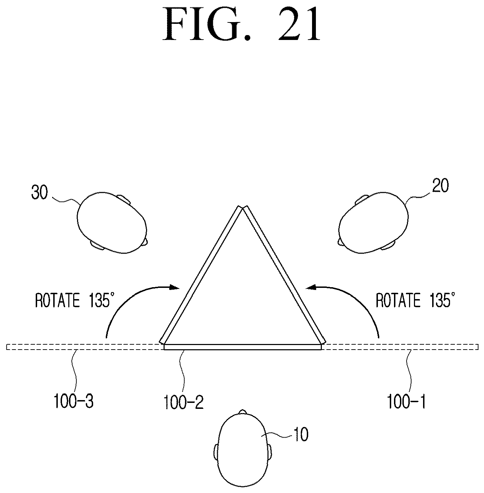

FIG. 21 illustrates a case where three users 10, 20, and 30 use the display devices 100-1, 100-2, and 100-3 in a three-person conference mode in the state in which the three display devices 100-1, 100-2, and 100-3 are connected.

The control unit 140 may control the display devices 100-1 and 100-3 on both sides to fold in the direction of the arrows so that the entire display device 100-1, 100-2, and 100-3 is disposed in a triangular shape.

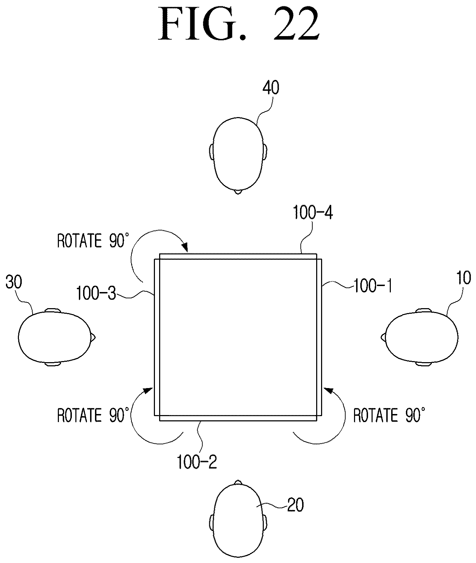

FIG. 22 illustrates a case where four users 10, 20, 30, and 40 use the display devices 100-1 to 100-4 in a four-person conference mode in the state in which the four display devices 100-1, 100-2, 100-3, and 100-4 are connected.

The control unit 140 may maintain one 100-2 of all the display devices 100-1 to 100-4 and fold the remaining display devices 100-1, 100-3, and 100-4 by about 90° in the direction of the arrow. Accordingly, all the display devices 100-1 to 100-4 may be disposed in a square shape.

In FIGS. 20 to 22, the control unit 140 may identify whether the system is in conference mode based on the user command input by the user. Alternatively, when a specific conference-related application is executed and the number of users is input through a UI screen provided by the application, the control unit 140 may operate in various conference modes, such as a two-person conference mode, a three-person conference mode, or a four-person conference mode, depending on the number of users.

In the above description, embodiments in which the arrangement is changed by motion gestures or user input have been described. However, the control unit 140 may also identify the user command using the speech recognition technology.

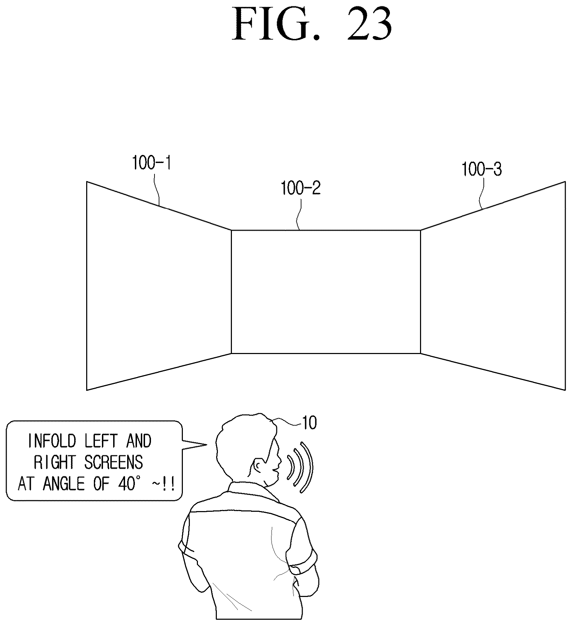

FIG. 23 illustrates a case where the arrangement of all the display devices is changed by recognizing the user's speech. Referring to FIG. 23, in the state in which three display devices 100-1, 100-2, and 100-3 are connected, when the user 10 speaks information on a specific display device and information on a folding angle, the control unit 140 may receive the speech signal spoken by the user through a microphone. The microphone may be connected to one of the display devices 100-1, 100-2, and 100-3 or may be built into an external device, such as a remote control or a mobile phone. When the microphone is built into the external device, the corresponding device may transmit the speech signal input through the microphone to the display device 100.

The control unit 140 may recognize the user's speech in various ways. For example, the control unit 140 removes noise from the input speech signal and then extracts a feature vector. The control unit 140 may generate a phoneme sequence from the feature vector using an acoustic model. The phoneme sequence may be a continuous arrangement of phonemes, the smallest units of phonology capable of distinguishing meaning. The control unit 140 may generate a word sequence by decoding the phoneme sequence into word units, or a syllable sequence by decoding the phoneme sequence into syllable units. The word sequence may be a continuous arrangement of words that are separated by whitespace in text resulting from speech recognition. The syllable sequence may be a continuous arrangement of syllables, which are units of speech sounds having a single phonetic value. The control unit 140 may generate a plurality of words or syllables from the phoneme sequence based on dictionary data stored in the memory 150.

The control unit 140 may determine text resulting from the recognition of the speech signal based on at least one of the word sequences and the syllable sequences. The control unit 140 may combine the word sequences and the syllable sequences by replacing at least one word element among the word sequences with a syllable sequence, and determine the combined results as text resulting from the speech recognition. The control unit 140 may recognize the meaning of the text based on the pre-stored dictionary data.

FIG. 23 illustrates a case where a user speaks "left/right screen infolding 40°." The control unit 140 may recognize the meaning of each word by dividing text into word units, such as "left/right/screen/infolding/40°," and combine the meanings to recognize the meaning of the entire text. Based on the recognition result, the control unit 140 may fold the display devices 100-1 and 100-3 positioned on either side of the three display devices 100-1, 100-2, and 100-3 by 40° inward, i.e., toward the user. The infolding refers to that the display device is folded toward the direction in which the display is disposed, and the outfolding refers to that the display device is folded in the opposite direction of the display, i.e., toward the rear.

The above description has been made based on a case in which the control unit 140 of the display device 100 directly performs speech recognition. However, the speech recognition may also be performed by an external device, such as a speech recognition server, rather than the display device 100. In this case, the control unit 140 may transmit the input speech signal to the speech recognition server through the communication unit 160, and receive, through the communication unit 160, text that is the recognition result of the speech recognition server, the meaning of the text, or the control signal corresponding to the text.

Also, while the above-described embodiments have described specific examples of the methods for performing motion recognition and speech recognition, the motion recognition and speech recognition may be performed in various ways other than those described above. For example, the control unit 140 may perform the speech recognition or the motion recognition using an artificial intelligence model.

An artificial intelligence model trained for the speech recognition may also be referred to as a speech recognition model. The speech recognition model may recognize the user's speech and acquire text data corresponding to the user's speech.

The artificial intelligence model trained for the motion recognition may also be referred to as a motion recognition model. The motion recognition model may be trained using multiple training images obtained by capturing the user or the surrounding background.

Based on the output value of the motion recognition model, the control unit 140 may recognize the user's face, the changes in the user's posture, position, distance, gaze direction, etc., and based on the output value of the speech recognition model, the control unit may recognize the meaning of the speech signal spoken by the user. Based on the recognized results, the control unit 140 may change the arrangement of all the display devices in various ways, as described above.

In the various embodiments described above, when the display device 100 is to be folded directly, the control unit 140 controls at least one of the plurality of motors 151 and 152 to rotate at least one of the wheels 131 and 132, and when the remaining display devices except the display device 100 among all the display devices are to be folded, the control unit 140 may transmit a control signal to the remaining display devices to fold the remaining display devices. In this case, the control unit 140 may transmit a control signal with identification information added thereto for specifying each display device. The identification information may be recorded in a header part of the control signal, but is not necessarily limited thereto. The identification information may be a product name, a serial number, etc., of each display device, or a unique number assigned to each display device when all the display devices are connected, etc. When the external display device connected to the display device 100 receives the control signal through the connection unit, it determines whether the identification information included in the control information is its own identification information. When the identification information does not correspond to its own identification information, the control signal may be transmitted to the opposite display device through the opposite connection unit.

For example, in the case where four display devices are connected to each other and used as in FIG. 1, when the display device 100 is the first display device 100-1 disposed on one side of the four devices, and each display device 100-1 to 100-4 is connected to a peripheral display device through the connection unit, the control unit 140 may not directly transmit the control signal to the fourth display device 100-4 on the opposite side. In this case, the control unit 140 may generate the control signal including the identification information that may identify the fourth display device 100-4, and transmit the control signal to the second display device 100-2 connected right next to the fourth display device 100-4 through the connection unit. The second and third display devices 100-2 and 100-3 may confirm the identification information included in the control signal and transmit the control signal to the fourth display device 100-4. The control signal may include various pieces of information, such as the identification information, the folding angle, the folding direction, the folding speed, and the control code.

As described above, the plurality of display devices may be connected to each other using an intermediate medium, such as the hinge device. The hinge device may also be referred to as a connecting device, a bridge device, or the like.

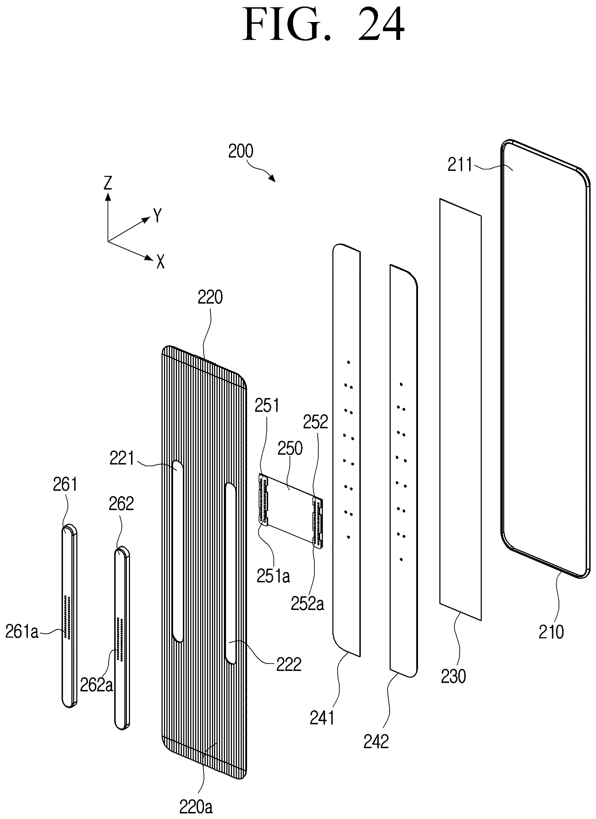

FIG. 24 is a diagram illustrating the configuration of the hinge device according to at least one embodiment of the present disclosure. Referring to FIG. 24, the hinge device 200 may include a first cover 210, a second cover 220 corresponding to the first cover 210, a flexible printed circuit board (FPCB) 250 for electrically connecting the plurality of display devices, and first and second coupling members 261 and 262 to which both sides of the FPCB 250 are fixed.

As illustrated in FIG. 2, the hinge device 200 is structured to connect the plurality of display devices to each other through the back surfaces. For aesthetic reasons, the hinge device 200 should preferably be invisible from the front of the display devices. Therefore, the vertical lengths of the first cover 210 and the second cover 220 may be designed to be somewhat smaller than the vertical lengths of the surrounding display devices. For example, the lengths of the first cover 210 and the second cover 220 may be approximately 70 to 99% of the vertical length of the display devices.

The first cover 210 may be made of a material having flexibility and toughness. For example, the first cover 210 may be made of rubber or an elastic synthetic resin. The first cover 210 may be smoothly bent around the Z-axis and a plurality of grooves may be formed along the longitudinal direction of the first cover 210 on the outer surface thereof to minimize twisting around the X-axis.

A receiving groove 211 may be provided on one surface of the first cover 210 to which the second cover 220 is coupled. The receiving groove 211 of the first cover 210 may accommodate a bending member 230, a first reinforcing plate 241, a second reinforcing plate 242, and an FPCB 250.

The second cover 220 may be coupled to the first cover 210 with the bending member 230, the first reinforcing plate 241, the second reinforcing plate 242, and the FPCB 250 accommodated in the receiving groove 211 of the first cover 210. Accordingly, the bending member 230, the first reinforcing plate 241, the second reinforcing plate 242, and the FPCB 250 are disposed between the first cover 210 and the second cover 220 and may be protected from external impact.

The second cover 220 may have the plurality of grooves formed along the longitudinal direction of the second cover 220, similar to the first cover 210. The second cover 220 may be made of the same material as the first cover 210.

The bending member 230 may be made of a flexible plastic film. The bending member 230 may be disposed along the longitudinal direction of the first cover 210. The bending member 230 may be disposed in the middle portion of the hinge device 200.

The first reinforcing plate 241 and the second reinforcing plate 242 may be coupled to both sides of the bending member 230 along the longitudinal direction of the bending member 230. For example, the first reinforcing plate 241 may have one rear side attached to one front side (e.g., double-sided adhesive tape) of the bending member 230 using an adhesive. The second reinforcing plate 242 may be attached to the other side of the front surface of the bending member 230 through an adhesive on one side of the rear surface.

The FPCB 250 may electrically connect the plurality of display devices. The FPCB 250 may have a first connector 251 and a second connector 252 mounted on both ends. The first connector 251 and the second connector 252 may each be provided with a plurality of pogo pins 251a and 252a. Each of the plurality of pogo pins 251a and 252a may include a barrel made of conductive metal and a plunger movably coupled to the tip of the barrel to be advanced and retracted while being elastically supported by a coil spring embedded in a barrel.

The first connector 251 may be electrically connected to one (e.g., 100-1) of the plurality of display devices. For example, the first connector 251 may be electrically connected to the second connection unit 122-1 provided in the first display device 100-1. The first connection unit 122-1 may include a printed circuit board having a plurality of terminals to which the plurality of pogo pins 251a of the first connector 251 are electrically connected. The printed circuit board 210 of the first connection unit 122-1 may be electrically connected to the control unit 140 of the first display device 100-1 or another printed circuit board.

The second connector 252 may be electrically connected to the second display device 100-2. For example, the second connector 252 may be electrically connected to the first connection unit 121-2 provided in the second display device 100-2. The second connector 252 may be made of the same material as the first cover 251.

The first coupling member 261 may be connected to a first reinforcing plate 241 through a first through-hole 221 provided in the second cover 220. For example, the first connecting member 261 may be fastened to the first reinforcing plate 241 through a plurality of screws.

The first connecting member 261 may be detachably inserted into the second connection unit 122-1 provided in the first display device 100-1. The first coupling member 261 may be provided with a connector coupling groove 261a formed at a substantially central portion of a rear surface thereof, to which the first connector 251 is coupled. The connector connecting groove 261a may be provided with a plurality of pin holes 261b into which the plurality of pogo pins 251a of the first connector 251 are inserted.

A plurality of permanent magnets may be coupled to the upper and lower sides of the connector coupling groove 261a on the rear surface of the first coupling member 261. When the first coupling member 261 is inserted into the second connection unit 122-1 of the first display device 100-1, an attractive force acts between the plurality of permanent magnets of the first coupling member 261 and the plurality of permanent magnets provided in the second connection unit 122-1, so that the first coupling member 261 may be coupled to the second connection unit 122-1. Therefore, the hinge device 200 according to an example of the present disclosure may be easily mounted and detached from display devices without separate screws or tools for fastening and disassembling the screws.

The plurality of permanent magnets coupled to the first connector 261 may correspond to the first reinforcing plate 241. Accordingly, the first reinforcing plate 241 may be a magnetic material. Accordingly, the first reinforcing plate 241 may function as a yoke that increases the magnetic force of the plurality of permanent magnets.

The second coupling member 262 may be coupled to a second reinforcing plate 242 through a second through-hole 222 provided in the second cover 220. The second coupling member 262 may be detachably inserted into the first connection unit 121-2 provided in the second display device 100-2. The second reinforcing plate 242 may be a magnetic material, and the second reinforcing plate 242 may function as a yoke that increases the magnetic force of the plurality of permanent magnets.

The second coupling member 262 may be configured substantially the same as the first coupling member 261. For example, the second coupling member 262 may have a connector coupling groove 262a provided at approximately the center of the rear surface, into which the second connector 252 is coupled. The connector coupling groove 262a may be provided with a plurality of pin holes 261b into which the plurality of pogo pins 252a of the second connector 252 are inserted. A plurality of permanent magnets may be coupled to each of the upper and lower sides of the connector coupling groove 262a on the rear surface of the second coupling member 262.

Although the case in which a plurality of display devices are physically and electrically coupled using the hinge device has been described above, the system as illustrated in FIG. 1 may also be implemented by physically coupling the plurality of display devices when the plurality of display devices perform communication.

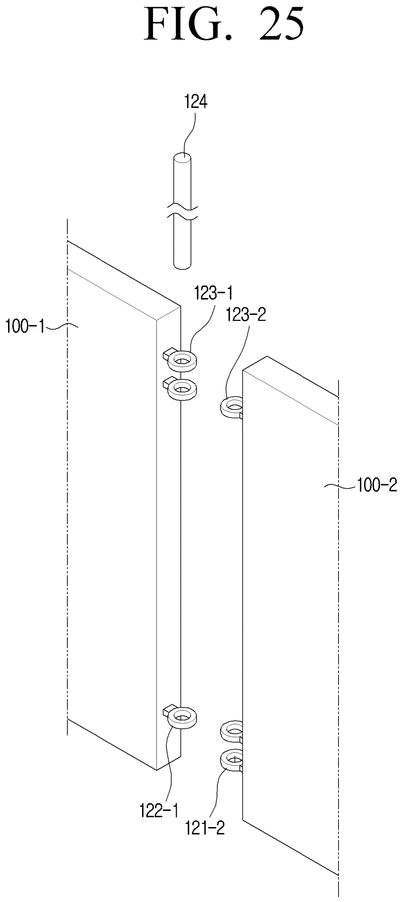

FIG. 25 illustrates the configuration of the display device according to the present embodiment. Referring to FIG. 25, the connection units 122-1 and 121-2 of the first and second display devices 100-1 and 100-2 include a plurality of rings 123-1 and 123-2 formed in a lateral direction. The rings 123-1 and 123-2 are disposed to interlock with each other. When the plurality of rings 123-1 and 123-2 are interlocked and secured with a pin 124, the first and second display devices 100-1 and 100-2 may rotate around the pin 124. The pin 124 may be formed as an elongated cylindrical bar penetrating the rings.

In addition, the configuration of the connection unit and the hinge device may be modified in various ways.

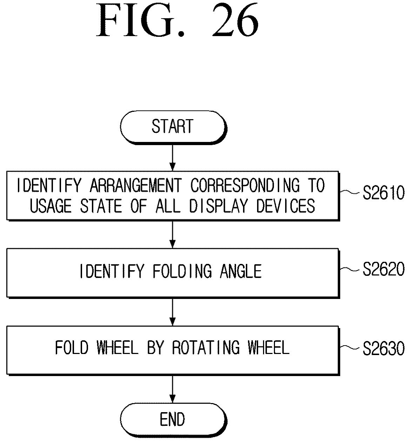

FIG. 26 is a flowchart illustrating a control method of a display device according to at least one embodiment of the present disclosure.

Referring to FIG. 26, the display device connected to at least one external display device identifies an arrangement corresponding to the operational state of all the display devices (S2610). As described above, a user may set and use various options related to the operation of all the display devices. Furthermore, a user may select various content sources and content to use all the display devices. In addition, the user may use the device to display a plurality of contents simultaneously. While using all the display devices, the user may change the position, distance, gaze direction, posture, etc. Furthermore, the user may input user commands using motion recognition, speech recognition, or other input devices to change the arrangement of all the display devices or the folding angle of a specific display device. The operational state may be information on various situations, such as the above description. Since specific descriptions of each embodiment have been provided in the preceding sections, further explanation will be omitted.

When the arrangement is identified, the display device may identify the folding angle of the display device based on its position within all the display devices and the identified arrangement (S2620).

When the folding angle is identified, the display device may rotate at least one of the plurality of wheels positioned at the bottom of both sides of the display device so that the display device folds by the identified folding angle (S2630). Specifically, the display device may rotate the wheel positioned at the bottom opposite the connection point with the external display device, thereby folding the display device relative to the connection unit.

When the display device is set as the main device, the display device may transmit the control signal to each external display device so that the remaining external display devices may also fold based on the arrangement of all the display devices.

When the display device is not set as the main device, the display device may receive the control signal from another connected display device set as the main device and change the folding angle according to the control signal.

Furthermore, according to other embodiments of the present disclosure, without a separate operation for setting a main device, each of the display devices may be individually changed to a folding angle corresponding to its own position among all display devices, such that an overall arrangement is changed.

The control method illustrated and described in FIG. 26 may be performed by the display device having the configuration illustrated in FIGS. 7 and 8, but is not necessarily limited thereto, and may be performed by the display devices having various configurations.

In addition, in the various embodiments described above, all the display devices may be unfolded parallel in a standby state, change their arrangement when the event of the above-described embodiments occurs, and then return to a state of being unfolded parallel when the event ends.

For example, in FIGS. 9 and 10, all the display devices 100-1 to 100-4 are originally disposed parallel along the line P. When a user executes a game, the arrangement is changed as illustrated in FIG. 9. After the user ends the execution of the game, the display devices may be disposed along the line P again. However, the present disclosure is not necessarily limited thereto, but the arrangement may remain in its changed state.

Also, the above description has been made with reference to the case the case where one of the plurality of interconnected display devices, or each of all display devices, changes the folding angle to change the overall arrangement, but the present disclosure is not necessarily limited thereto. In other words, the arrangement of all the display devices may be controlled by an external electronic apparatus connected to at least one of the plurality of display devices. For example, when various electronic apparatuses, such as set-top boxes, OC boxes, PCs, laptop PCs, mobile phones, or tablet PCs, are connected to the display device, these electronic apparatuses may determine the arrangement of each display device and transmit the control signal.

According to the various embodiments described above, the user may easily identify even the display devices in the lateral direction while connecting and using the plurality of display devices. Furthermore, since the arrangement may be automatically and adaptively adjusted based on the user's usage state, the display devices may be used optimally in any situation.

Although the above description has explained each embodiment individually, these embodiments may be combined in whole or in part with other embodiments and implemented together in a single device.

Also, while the above description assumes a single independent display device connected to at least one external display device, each display device may be implemented as a display module that may not be used independently. In this case, various embodiments described above may be implemented in a single display device or display system including a plurality of display modules that may be connected to each other.

Various embodiments described above may be implemented by software including instructions stored in a machine-readable storage medium (for example, a computer-readable storage medium).

Specifically, a program code or instructions may be stored and provided on a non-transitory computer-readable medium, the program code or instructions causing the sequential execution of: a step of identifying an operational state of all display devices; and a step of folding at least one of all the display devices with respect to a connection portion with another device so that all the display devices are arranged in a form corresponding to the operational state.

Such a non-transitory computer-readable medium may be mounted in and used by a device capable of calling stored instructions from the storage medium and operating according to the called instructions. Accordingly, when the program or instructions stored on the non-transitory computer-readable medium are executed by a processor, the processor may perform the operations described in the various embodiments above either directly or by using other components under the control of the processor.

The non-transitory computer-readable medium is not a medium that stores data for a while, such as a register, a cache, a memory, or the like, but means a medium that semi-permanently stores data and is readable by the apparatus. A specific example of the non-transitory computer-readable medium may include a compact disk (CD), a digital versatile disk (DVD), a hard disk, a Blu-ray disk, a universal serial bus (USB), a memory card, a read only memory (ROM), or the like.

The command may include codes created or executed by a compiler or an interpreter. The machine-readable storage medium may be provided in a form of a non-transitory storage medium. Here, the term "non-transitory" means that the storage medium is tangible without including a signal, and does not distinguish whether data are semi-permanently or temporarily stored in the storage medium.

In addition, according to one or more embodiments of the disclosure, the above-described methods according to the diverse embodiments may be included and provided in a computer program product. The computer program product may be traded as a product between a seller and a purchaser. The computer program product may be implemented not only as the above-described non-transitory computer-readable recording medium, but also as a product distributed online through an application store (e.g., the Play Store^{™}). In case of the online distribution, at least a portion of the computer program product may be at least temporarily stored in a storage medium such as a memory of a server of a manufacturer, a server of an application store, or a relay server or be temporarily generated.

Although exemplary embodiments of the present disclosure have been illustrated and described hereinabove, the present disclosure is not limited to the abovementioned specific exemplary embodiments, but may be variously modified by those skilled in the art to which the present disclosure pertains without departing from the gist of the present disclosure as disclosed in the accompanying claims. These modifications should also be understood to fall within the scope and spirit of the present disclosure.

## Claims

1. A display device, comprising:
a housing on which a display is mounted;
at least one connection unit formed on at least one side of the housing;
a plurality of wheels disposed on both sides of a lower end of the housing;
a plurality of motors configured to rotate each of the plurality of wheels; and
a control unit,
wherein, when at least one external display device is connected to the housing by the at least one connection unit and used, the control unit controls at least one of the plurality of motors according to an operational state of all display devices, including both the display device and the at least one external display device.

2. The display device as claimed in claim 1, wherein, when a control signal for rotating the at least one wheel in the first direction or the second direction is received from the at least one external display device through the at least one connection unit, the control unit controls at least one of the plurality of motors in response to the control signal.

3. The display device as claimed in claim 1, wherein the control unit identifies operational state information of at least one of a position of a user, a distance from the user, and a gaze direction of the user based on a captured image of the user using all the display devices, determines an arrangement of all the display devices based on the identified operational state information, and
transmits, to the external display device through the at least one connection unit, a control signal, based on the determined arrangement, for controlling at least one of the plurality of motors or folding the at least one external display device.

4. The display device as claimed in claim 3, wherein, when a change in state of the user is recognized based on continuously captured images, the control unit changes the arrangement according to the change in state, and
transmits, to the external display device through the at least one connection unit, a control signal, based on the changed arrangement, for controlling at least one of the plurality of motors or folding the at least one external display device.

5. The display device as claimed in claim 1, further comprising:
a memory storing user-specific configuration information;
wherein the control unit recognizes a user using all the display devices based on a captured image of the user, acquires configuration information corresponding to the recognized user from the memory, and
transmits, to the external display device through the at least one connection unit, a control signal, based on the configuration information on the arrangement of all the display devices among the acquired configuration information, for controlling at least one of the plurality of motors or folding the at least one external display device.

6. The display device as claimed in claim 1, further comprising:
a memory storing information on arrangements differently set according to the type or number of content,
wherein the control unit identifies the type or number of content provided by all the display devices, acquires the information on the arrangements corresponding to the identified type or number from the information stored in the memory, and transmits, to the external display device through the at least one connection unit, a control signal, based on the acquired information, for controlling at least one of the plurality of motors or folding the at least one external display device.

7. The display device as claimed in claim 1, wherein, when a user command for adjusting the arrangement or a folding angle of at least one of all the display devices is input, the control unit transmits, to the external display device through the at least one connection unit, a control signal, based on the input user command, for controlling at least one of the plurality of motors or folding the at least one external display device.

8. A control method for a display device, comprising:
identifying an arrangement corresponding to an operational state of all display devices, including the display device and at least one external display device, in a state in which the display device is connected to at least one external display device in at least one direction and used;
identifying a folding angle of the display device based on a position of the display device within all the display devices and the identified arrangement; and
rotating at least one of a plurality of wheels disposed on both sides of a lower end of the display device so that the display device folds by the folding angle based on a connection portion with the at least one external display device.

9. The control method as claimed in claim 8, wherein the identifying of the arrangement includes:
capturing a user using all the display devices with a camera;
identifying at least one operational state information among a position of the user, a distance from the user, and a gaze direction of the user based on the captured image; and
identifying the arrangement based on the identified operational state information.

10. The control method as claimed in claim 9, further comprising:
continuously capturing the user's state with the camera; and.
changing the folding angle based on a change in the user's state recognized based on the continuously captured images.

11. The control method as claimed in claim 8, wherein the identifying of the arrangement includes:
capturing the user using all the display devices with a camera;
recognizing the user based on the captured image; and
acquiring configuration information on the recognized user from pre-stored configuration information, and identifying configuration information on the arrangement from the acquired configuration information.

12. The control method as claimed in claim 8, wherein the identifying of the arrangement includes:
identifying the type or number of content provided by all the display devices; and
acquiring information on the arrangement corresponding to the identified type or number from the pre-stored information.

13. The control method as claimed in claim 8, further comprising:
receiving a user command for adjusting the arrangement or the folding angle; and
rotating at least one of a plurality of wheels disposed on both sides of the lower end of the display device based on the user command.

14. The control method as claimed in any one of claims 8 to 13, further comprising:
transmitting, to the external display device, a control signal for folding the at least one external display device based on a arrangement position of the at least one external display device among all the display devices and the identified arrangement; and
displaying a UI object indicating the arrangement or a folding angle of each of all the display devices.

15. A non-transitory readable recording medium storing a program for executing a control method for controlling an operation of all display devices in a display device connected to at least one external display device and used,
wherein the control method includes:
identifying an operational state of all the display devices; and
folding at least one of all the display devices based on a connection portion with another device so that all the display devices are disposed in a form corresponding to the operational state.
